# EUROPEAN PATENT APPLICATION

(11) **EP 4 726 000 A1**
(43) Date of publication of application: **15.04.2026**
(21) Application number: 25206912.5
(22) Date of filing: 06.10.2025
(51) Int. Cl.: C09D 11/54, C09D 11/107, C09D 11/40, C09D 11/322, C09D 11/38

(54) **PRETREATMENT LIQUID, INK SET, INKJET RECORDING APPARATUS, AND INKJET RECORDING METHOD**

(30) Priority: 09.10.2024 JP 2024177496
(71) Applicant: KYOCERA Document Solutions Inc., Osaka-shi, Osaka 540-8585 (JP)
(72) Inventor: TAKAORI, Yasuko, Osaka-shi, Osaka, 540-8585 (JP)
(74) Representative: Viering, Jentschura & Partner mbB Patent- und Rechtsanwälte

(57) **Abstract**

A pretreatment liquid is used for pretreating an impermeable medium on which an image is recorded with a water-based ink. A polar component of surface free energy of the impermeable medium is 20 mJ/m² or less. The pretreatment liquid contains core-shell particles including 2-ethylhexyl acrylate as a core and benzyl methacrylate as a shell.

## Description

### Field

The present disclosure relates to a pretreatment liquid, an ink set, an inkjet recording apparatus, and an inkjet recording method.

### Background

Japanese Patent Application Laid-open No. 2003-313468 and Japanese Patent Application Laid-open No. 2024-062760 disclose water-based inks for forming images on media using an inkjet recording apparatus. In such water-based inks, high adhesion to impermeable media is essential when forming images on impermeable media with low water permeability. In contrast, the water-based ink described in Japanese Patent Application Laid-open No. 2024-062760 contains microparticles of urethane resin as a binder to achieve high adhesion to the impermeable media.

### Summary

In order to achieve the above-mentioned object, a pretreatment liquid according to an embodiment of the present disclosure is used for pretreating an impermeable medium on which an image is recorded with a water-based ink. A polarity component of surface free energy of the impermeable medium is 20 mJ/m² or less. The pretreatment liquid contains core-shell particles including 2-ethylhexyl acrylate as a core and benzyl methacrylate as a shell.

An ink set according to an embodiment of the present disclosure includes the pretreatment liquid and the water-based ink. The water-based ink includes a pigment, polyurethane microparticles, a water-soluble solvent, and water. The polyurethane microparticles have a glass transition temperature of 40°C or more and 110°C or less and elongation at break at 25°C of 50% or less. The water-soluble solvent has a boiling point of 200°C or more and an SP value of 19.5 or more and 25.5 or less. A content of the polyurethane microparticles in the water-based ink is 3 mass% or more and 8 mass% or less in solid content. A content of the water-soluble solvent in the water-based ink is 0.5 mass% or more and less than 2 mass%.

A D50 of the polyurethane microparticles may be 10 nm or more and 100 nm or less.

The water-based ink may further contain a silicone-based surfactant.

An inkjet recording apparatus according to an embodiment of the present disclosure records an image on a recording surface of an impermeable medium. The inkjet recording apparatus includes a pretreatment section, a recording head, and a control section. The pretreatment section applies the pretreatment liquid to the recording surface. The recording head ejects the water-based ink onto the recording surface. The control section controls the recording head to eject the water-based ink onto the recording surface after the pretreatment section applies the pretreatment liquid to the recording surface, when the impermeable medium contains at least one of polypropylene and polyethylene.

The inkjet recording apparatus may further include a determination section that determines whether or not the impermeable medium includes at least one of polypropylene and polyethylene. In this case, the control section controls the recording head to eject the water-based ink onto the recording surface after the pretreatment section applies the pretreatment liquid to the recording surface, when the determination section determines that the impermeable medium contains at least one of polypropylene and polyethylene.

The recording head may be a circulating line head.

The inkjet recording apparatus may be used to produce a printed material in which the recording surface of the impermeable medium is visible on a front side and no processing is applied to protect the image.

In an inkjet recording method according to an embodiment of the present disclosure, an image is recorded on the recording surface of the impermeable medium. In the inkjet recording method, after applying the pretreatment liquid to the recording surface, the water-based ink is ejected onto the recording surface.

### Brief Description of Figures

Fig. 1 is a flowchart showing an inkjet recording method according to an embodiment of the present disclosure.
Fig. 2 is a block diagram showing a general configuration of an inkjet recording apparatus according to an embodiment of the present disclosure.
Fig. 3 is a diagram showing evaluation criteria for abrasion resistance.

### Detailed Description

In water-based inks, high abrasion resistance is needed for an application where images are formed on a side exposed to a viewer on impermeable media. In this regard, the water-based inks containing microparticles of urethane resin tend to exhibit insufficient abrasion resistance in the images formed on the impermeable media. Additionally, the water-based inks containing binders also have an issue of poor ejection stability.

In view of the above circumstances, an object of the present disclosure is to provide a technology capable of forming an image with high adhesion on an impermeable medium with a water-based ink.

Embodiments of the present disclosure will now be described.

### [Ink set configuration]

An ink set according to an embodiment of the present disclosure includes a pretreatment liquid and a water-based ink (hereinafter referred to simply as "ink"). A recording medium on which the image is formed with the ink set according to this embodiment is an impermeable medium having a low-polarity recording surface with low ink permeability and poor ink adhesion. Specifically, in this impermeable medium, a polarity component of surface free energy is 20 mJ/m² or less. Examples of such impermeable medium include a polypropylene film, a polyethylene film, and the like. Note that the surface free energy of the impermeable medium can be measured using a commercially available surface free energy measurement apparatus, such as "Handheld Contact Angle Meter MSA Flex" manufactured by Sanyo Trading Co., Ltd.

In the ink set according to this embodiment, the image is formed with the ink on the recording surface of the impermeable medium after applying the pretreatment liquid. The ink set according to this embodiment is configured to be capable of forming the image that has both the adhesion and the abrasion resistance on the impermeable medium, as will be described in detail below. Accordingly, the ink set according to this embodiment is configured to be capable of forming the image with both the adhesion and the abrasion resistance on the surface exposed to the viewer on the impermeable medium, such as when used for surface printing on a transparent impermeable medium. This eliminates a need for additional processing such as lamination to protect the image, thereby reducing a likelihood of peeling or abrasion of the image. Therefore, the ink set according to this embodiment is particularly suitable for producing a printed material where the recording surface of the impermeable medium is visible on a front side and no additional processing is applied to protect the image. However, the ink set according to this embodiment is not limited to the above-mentioned application and may also be used, for example, for back printing on the transparent impermeable medium.

### [Pretreatment liquid]

### (General configuration)

The pretreatment liquid according to this embodiment contains a binder X and water. The pretreatment liquid according to this embodiment is applied to the recording surface of the impermeable medium and dried thereon to form a pretreatment layer on the impermeable medium.

### (Binder X)

The binder X is contained in the pretreatment liquid according to this embodiment to improve the adhesion of the image formed by the ink to the impermeable medium. In the pretreatment liquid according to this embodiment, core-shell particles including 2-ethylhexyl acrylate as a core and benzyl methacrylate as a shell are used as the binder X. In the pretreatment liquid according to this embodiment, 2-ethylhexyl acrylate, which has an effect of improving the adhesion to a low-polarity surface, is used as the core of the core-shell particles configuring the binder X, thereby enhancing the adhesion of images formed by ink to a low-polarity impermeable medium.

Furthermore, in the pretreatment liquid according to this embodiment, by using benzyl methacrylate, which has a high glass transition temperature and high hardness, as the shell of the core-shell particles configuring the binder X, the ejection stability in the recording head can be improved. Therefore, the pretreatment liquid according to this embodiment can be accurately applied to a position where the image is formed on the recording surface of the impermeable medium by ejection from the recording head. As a result, the pretreatment liquid according to this embodiment can improve a drying property of the printed material while suppressing an amount used.

In this way, the pretreatment liquid according to this embodiment ensures the ejection stability while achieving high adhesion to low-polarity impermeable medium in the image formed by ink by imparting mutually different functions to the core and shell of the core-shell particles configuring the binder X. Such effect of the pretreatment liquid according to this embodiment is more effectively obtained in combination with the ink of the ink set according to this embodiment. However, the effect of the pretreatment liquid according to this embodiment is also effectively obtained in combination with water-based ink different from the ink of the ink set according to this embodiment, i.e., not as the ink set according to this embodiment.

In the pretreatment liquid according to this embodiment, a content of the binder X is preferably 5 mass% or more in solid content to sufficiently obtain the effect of the binder X. Furthermore, in the pretreatment liquid according to this embodiment, the content of the binder X is preferably 25 mass% or less in solid content to avoid an ejection failure due to thickening caused by drying.

### (Water)

In the pretreatment liquid according to this embodiment, water, for example, ion-exchange water, purified water, distilled water, or the like may be used. In the pretreatment liquid according to this embodiment, from the viewpoint of the drying property and ejection reliability, it is preferable that a water content is 40 mass% or more and 80 mass% or less.

### (Other components)

The pretreatment liquid according to this embodiment may contain other components in addition to the above as necessary. For example, the pretreatment liquid according to this embodiment may contain a water-soluble organic solvent. The water-soluble organic solvent contained in the pretreatment liquid according to this embodiment is not particularly limited as long as it is compatible with the other components. In the pretreatment liquid according to this embodiment, the drying property of the pretreatment liquid can be adjusted by the water-soluble organic solvent. Examples of the water-soluble organic solvent that can be used in the pretreatment liquid according to this embodiment include methanol, ethanol, 1-propanol, 2-propanol, propylene glycol, acetone, tetrahydrofuran, acetonitrile, and the like.

Additionally, the pretreatment liquid according to this embodiment may contain a surfactant. In the pretreatment liquid according to this embodiment, the surfactant can improve compatibility and dispersion stability of each component. Furthermore, in the pretreatment liquid according to this embodiment, the surfactant can enhance wettability of the recording medium. As the surfactant to be contained in the pretreatment liquid according to this embodiment, a nonionic surfactant is preferable.

Furthermore, the pretreatment liquid according to this embodiment may contain various additives such as a solubility stabilizer, a drying inhibitor, an antioxidant, a viscosity adjuster, a pH adjuster, an antifungal agent, or the like, in addition to the water-soluble organic solvent and the surfactants as necessary.

### [Water-based ink]

### (General configuration)

The water-based ink according to this embodiment contains a pigment a, a binder b, a water-soluble solvent c, and water. The ink according to this embodiment forms an image on the recording surface of the impermeable medium by being ejected from a recording head of an inkjet recording apparatus onto the recording surface of the impermeable medium. In the ink according to this embodiment, by using the binder b of a specific configuration and the water-soluble solvent c of a specific configuration in combination, the image having both the adhesion and the abrasion resistance to the impermeable medium can be formed. The details of each component of the ink according to this embodiment will be described below.

### (Pigment a)

The ink according to this embodiment contains the pigment a as a colorant from the viewpoint of improving color mixing prevention and water resistance in the image recorded on the recording medium. The pigment a may be either an inorganic pigment or an organic pigment. Additionally, the pigment a may be used in combination with an extender pigment as necessary.

Specific examples of the inorganic pigment that can be used in the ink according to this embodiment include carbon black, a metal oxide, and the like, and carbon black is particularly preferable for a black ink. Examples of the carbon black include furnace black, thermal lamp black, acetylene black, channel black, and the like.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, a quinophthalone pigment, and the like.

In the ink according to this embodiment, a hue is not particularly limited, and any of following chromatic pigments may be used: yellow, magenta, cyan, blue, red, orange, green, etc. Specific examples of preferable chromatic pigments include C.I. Pigment Yellow, C.I. Pigment Red, C.I. Pigment Orange, C.I. Pigment Violet, C.I. Pigment Blue, C.I. Pigment Green, or the like. The ink according to this embodiment may use one or more types of these chromatic pigments as the pigment a.

### (Binder b)

The ink according to this embodiment contains the binder b to improve the adhesion of the image to the impermeable medium. In the ink according to this embodiment, the binder b is polyurethane microparticles formed from polyurethane. The polyurethane microparticles used as the binder b have a high glass transition temperature of 40°C or more and 110°C or less and a tensile elongation at break of 50% or less at 25°C after film formation, thereby being hard. As a result, the ink according to this embodiment exhibits high abrasion resistance in the image formed on impermeable medium.

The ink according to this embodiment uses the hard polyurethane microparticles as the binder b, which may reduce the effect of improving the adhesion of the image to the impermeable medium compared to a configuration using general polyurethane microparticles. In contrast, in the ink according to this embodiment, the adhesion of the image to the impermeable medium is compensated by the configuration of the water-soluble solvent c, and the adhesion of the image to the impermeable medium is sufficiently achieved by pretreating the impermeable medium with the pretreatment liquid.

In the ink according to this embodiment, a content of the binder b is 3 mass% or more in solid content in order to sufficiently obtain the effect of the binder b. Furthermore, in the ink according to this embodiment, the content of the binder b is 8 mass% or less in solid content in order to avoid the ejection failure due to contamination or thickening of a nozzle surface in the recording head. Furthermore, in the ink according to this embodiment, it is preferable that a particle size (D50) of the binder b is 10 nm or more and 100 nm or less in order to more effectively obtain the effect of the binder b.

### (Water-soluble solvent c)

The ink according to this embodiment has a boiling point of 200°C or more and an SP value (solubility parameter) of 19.5 or more and 25.5 or less. As a result, the ink according to this embodiment exhibits improved film uniformity, thereby achieving high adhesion of the image to impermeable medium. Examples of the water-soluble solvent c that can be used in the ink according to this embodiment include diethylene glycol monobutyl ether, tripropylene glycol, 3-methyl-1,3-butanediol, and the like.

In the ink according to this embodiment, a content of the water-soluble solvent c is 0.5 mass% or more to sufficiently obtain the effect of the water-soluble solvent c. Furthermore, in the ink according to this embodiment, since the water-soluble solvent c is a high-boiling-point solvent, the content of the water-soluble solvent c is 2 mass% or less to ensure the drying property on the impermeable medium.

### (Water)

In the ink according to this embodiment, ion-exchange water, purified water, distilled water, or the like may be used as water, for example. In the ink according to this embodiment, from the viewpoint of the drying property and the ejection reliability, it is preferable that the water content is 40 mass% or more and 80 mass% or less.

### (Other components)

The ink according to this embodiment may contain other components in addition to those described above as necessary. For example, the ink according to this embodiment preferably contains the surfactant. As the surfactant to be contained in the ink according to this embodiment, a silicone-based surfactant is preferable. In the ink according to this embodiment, containing the silicone-based surfactant improves a wetting spreadability on a surface of a layer formed by the pretreatment liquid on the impermeable medium. The silicone-based surfactant is a surfactant having siloxane bonds in molecules. Examples of a commercially available silicone-based surfactant include Silface (registered trademark) SAG002 and Silface SAG503A manufactured by Nisshin Chemical Industry Co., Ltd.

Additionally, the ink according to this embodiment may contain a dispersant that enhances dispersibility of the pigment a in the solvent. As the dispersant, pigment dispersing resin or the like may be used. The pigment dispersing resin is resin microparticles having water solubility that adhere to the surface of the pigment a to inhibit aggregation of the pigment a. Examples of the pigment dispersing resin include a copolymer of at least one monomer selected from (meth)acrylic acid alkyl ester, styrene, and vinyl naphthalene and at least one monomer selected from (meth)acrylic acid and maleic acid.

As the pigment dispersing resin, resin having a repeating unit derived from (meth)acrylic acid ((meth)acrylic acid unit), a repeating unit derived from (meth)acrylic acid alkyl ester ((meth)acrylic acid alkyl ester unit), and a styrene unit is preferable. In this case, a percentage of the (meth)acrylic acid unit among total repeating units in the pigment dispersing resin is preferably 4.5 mass% or more and 8.0 mass% or less. A percentage of the (meth)acrylic acid alkyl ester unit among total repeating units in the pigment dispersing resin is preferably 35 mass% or more and 70 mass% or less. A percentage of styrene unit among total repeating units of the pigment dispersing resin is preferably 27 mass% or more and 60 mass% or less. As the pigment dispersing resin, resin having the repeating unit derived from methacrylic acid, the repeating unit derived from methyl methacrylate, the repeating unit derived from butyl acrylate, and the styrene unit is more preferable.

In the ink according to this embodiment, a content of the pigment dispersing resin is preferably 0.5 mass% or more and 8.0 mass% or less, and more preferably 1.5 mass% or more and 4.0 mass% or less. By setting the content of the pigment dispersing resin to 0.5 mass% or more, the aggregation of the pigment a can be more effectively suppressed. By setting the content of the pigment dispersing resin to 8.0 mass% or less, an occurrence of nozzle clogging in the recording head can be suppressed.

Additionally, the ink according to this embodiment may contain various additives such as a solubility stabilizer, an antioxidant, a viscosity adjuster, a pH adjuster, a neutralizing agent, and the like, in addition to the surfactant and the pigment dispersing resin as necessary.

### [Inkjet recording method]

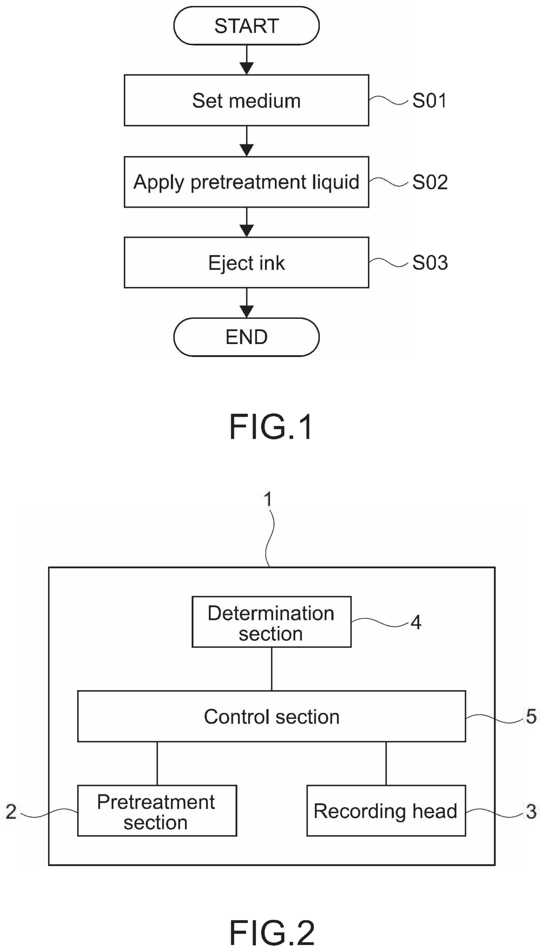

The inkjet recording method according to this embodiment uses the ink set according to the above-described embodiments. Fig. 1 is a flowchart showing the inkjet recording method according to this embodiment. In Step S01, the impermeable medium having the polarity component of the surface free energy of 20 mJ/m² or less is set at a predetermined position. In Step S02, the pretreatment liquid is applied to the recording surface of the impermeable medium set. In Step S03, the image is formed by ejecting the ink onto the recording surface of the impermeable medium to which the pretreatment liquid is applied.

### [Inkjet recording apparatus]

An inkjet recording apparatus 1 according to this embodiment is configured to be capable of performing the inkjet recording method according to this embodiment. Fig. 2 is a block diagram showing a general configuration of the inkjet recording apparatus 1. The inkjet recording apparatus 1 includes a pretreatment section 2, a recording head 3, a determination section 4, and a control section 5.

The pretreatment section 2 performs pretreatment by applying the pretreatment liquid to the recording surface of the impermeable medium. The pretreatment section 2 may be configured to have a recording head different from the recording head 3 and to eject the pretreatment liquid at the position where the image is formed on the recording surface of the impermeable medium by the recording head. As described above, since the ejection stability of the pretreatment liquid according to this embodiment is high, the pretreatment section 2 can eject the pretreatment liquid at an accurate position on the recording surface of the impermeable medium. The recording head that ejects the pretreatment liquid is preferably a circulating line head. In the circulating line head, the pretreatment liquid near the nozzle surface is constantly circulated, making it even less likely for the ejection failure due to thickening caused by drying to occur. Note that the pretreatment section 2 does not necessarily have to be configured using the recording head, and may, for example, be configured to apply the pretreatment liquid to an entire area of the recording surface of the impermeable medium using a roller.

The recording head 3 forms the image by ejecting the ink at the position where the image is formed on the recording surface of the impermeable medium. As described above, since ink ejection stability according to this embodiment is high, the recording head 3 can eject the ink at the accurate position on the recording surface of the impermeable medium. The recording head 3 is preferably the circulating line head. In the circulating line head, the ink is constantly circulating near the nozzle surface, making it even less likely for the ejection failure due to thickening caused by drying to occur.

The determination section 4 determines whether or not the impermeable medium needs the pretreatment with the pretreatment liquid. The determination section 4, for example, determines whether or not the polarity component of the surface free energy of the impermeable medium is 20 mJ/m² or less. In other words, when the polarity component of the surface free energy of the impermeable medium is determined to be 20 mJ/m² or less by the determination section 4, it is determined that the impermeable medium needs the pretreatment. Conversely, when the polarity component of the surface free energy of the impermeable medium is determined to be not 20 mJ/m² or less by the determination section 4, it is determined that the impermeable medium does not need the pretreatment.

Furthermore, the determination section 4 may determine whether or not the impermeable medium contains at least one of polypropylene and polyethylene. In other words, when the determination section 4 determines that the impermeable medium contains at least one of polypropylene and polyethylene, it is determined that the impermeable medium needs the pretreatment. Furthermore, when the determination section 4 determines that the impermeable medium does not contain either polypropylene or polyethylene, it is determined that the impermeable medium does not need the pretreatment.

When the determination section 4 determines that the impermeable medium needs the pretreatment, after the pretreatment liquid is applied to the recording surface of the impermeable medium by the pretreatment section 2, the control section 5 controls the recording head 3 to eject the ink onto the recording surface of the impermeable medium where the pretreatment liquid is applied. On the other hand, when the determination section 4 determines that the impermeable medium does not need the pretreatment, the control section 5 controls the recording head 3 to eject the ink onto the recording surface of the impermeable medium without applying the pretreatment liquid to the recording surface of the impermeable medium by the pretreatment section 2.

The inkjet recording apparatus 1 is not limited to the above configurations and may be modified as necessary. For example, the inkjet recording apparatus 1 may not have the determination section 4. In this case, the inkjet recording apparatus 1 may have an input operation section that receives a user input operation to determine whether or not the impermeable medium needs the pretreatment by applying the pretreatment liquid.

### [Examples and Comparative Examples]

In Examples and Comparative Examples of the present disclosure, preparation and evaluation of the pretreatment liquid and the ink were performed.

### (Pretreatment liquid preparation)

In the pretreatment liquid according to each of Examples, the binder X was used as a binder X1 shown in Table 1. The binder X1 was prepared by mixing 2-ethylhexyl acrylate, which serves as the core, and benzyl methacrylate, which serves as the shell, in a ratio of 7:3, and then emulsifying and polymerizing them as a dispersoid to form a water-based emulsion. The pretreatment liquid according to each of Examples was prepared by using in solid content 20 mass% of this water-based emulsion, 20 mass% of propylene glycol, and the rest of ion-exchange water.

In the pretreatment liquid according to each of Comparative Examples, one of binders X2 to X4 shown in Table 1 was used as the binder X. The binders X2 to X4 were also prepared as the dispersoids of the water-based emulsions, similar to the binder X1. The pretreatment liquid according to each of Comparative Examples was prepared by using in solid content 20 mass% of this water-based emulsion, 20 mass% of propylene glycol, and the rest of ion-exchange water.

**[Table 1]**

| Binder | Type |
|---|---|
| X1 | Core-shell particles |
| | Core: 2-ethylhexyl acrylate |
| | Shell: Benzyl methacrylate |
| X2 | 2-ethylhexyl acrylate particles |
| X3 | Benzyl methacrylate particles |
| X4 | Core-shell particles |
| | Core: 2-ethylhexyl acrylate |
| | Shell: Benzyl methacrylate |

### (Ink preparation)

First, a pigment dispersion liquid containing the pigment a dispersed in water was prepared. The pigment dispersion liquid was prepared by wet dispersing the pigment a, pigment dispersion resin, and water using a media-type wet disperser. In the wet dispersion using the media-type wet disperser, as media, for example, small-particle-size beads (e.g., beads with a D50 of 0.5 mm or more and 1.0 mm or less) can be used. The material of the beads is not particularly limited, but hard materials (e.g., glass and zirconia) are preferable.

In each of the inks of Examples and Comparative Examples, carbon black was used as the pigment a, styrene-acrylic resin was used as the pigment dispersion resin, and ion-exchange water was used as water. Furthermore, in each of the inks of Examples and Comparative Examples, the content of the pigment a was 3 mass%, the content of the pigment dispersion resin was 1.5 mass%, and the rest was water.

Next, the inks according to Examples and Comparative Examples were prepared. In each of the inks according to Examples and Comparative Examples, one of binders b1 and b2 shown in Table 2 was used as the binder b, and one of water-soluble solvents c1 and c2 shown in Table 3 was used as the water-soluble solvent c. Each of the inks according to Examples and Comparative Examples was prepared by blending the binder b, the water-soluble solvent c, the pigment dispersion, propylene glycol, triethylene glycol monobutyl ether, Silface SAG 503A, and water. In each of the inks according to Examples and Comparative Examples, ion-exchange water was used as water.

**[Table 2]**

| Binder | Type | Elongation at break (%) | D50(nm) | Tg(°C) |
|---|---|---|---|---|
| b1 | Urethane microparticles | 4 | 30 | 78 |
| b2 | Urethane microparticles | 5 | 30 | 46 |

**[Table 3]**

| Water-soluble solvent | Type | SP value | Boiling point (°C) |
|---|---|---|---|
| c1 | Tripropylene glycol | 21.9 | 270 |
| c2 | 3-methyl-1,3-butanediol | 25.1 | 203 |

### (Evaluation of pretreatment liquid and ink)

The adhesion of the image, the abrasion resistance of the image, the ejection stability of the pretreatment liquid, and the ink ejection stability were evaluated for Examples and Comparative Examples.

### • Evaluation method for adhesion of image

To evaluate the adhesion of the image, a solid image was formed by applying the pretreatment liquid to the impermeable medium and then ejecting the ink. As the impermeable medium, a corona-treated biaxially oriented polypropylene (OPP) film manufactured by Futamura Chemical Co., Ltd. was used. A tape (Cellotape (registered trademark) manufactured by Nichiban Co., Ltd., 18 mm wide, CT-18S) was applied to the solid image formed on the impermeable medium, and after peeling off the tape, the surface condition of the solid image was observed. In the solid image, a percentage of the area where the image peeled off to the total area where the tape was applied was measured. The adhesion of the image was evaluated based on measured values. Evaluation values for the adhesion of the image were evaluated using the following criteria A to C. With respect to the adhesion of the image, the solid image evaluated as A is passed, and the solid image evaluated as B or C is failed.
A: 0%
B: less than 50%
C: 50% or more

### • Evaluation method for abrasion resistance of image

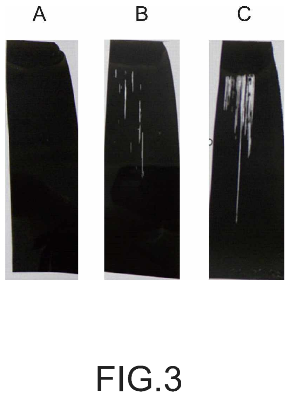

To evaluate the abrasion resistance of the image, first a solid image of each ink with a wet film thickness of approximately 6 µm was formed on the impermeable medium coated with each pretreatment liquid using a bar coater ("K303S Multi Coater" manufactured by Matsuo Industry Co., Ltd.) with the bar No. 1. The impermeable medium used was corona-treated biaxially oriented polypropylene (OPP) film manufactured by Futamura Chemical Co., Ltd. The solid image formed on the impermeable medium was dried at 100°C for 10 minutes, then left to stand at room temperature for half a day, after which abrasion resistance testing of the solid image was conducted using a Gakushin-type friction tester. The solid image after testing was visually inspected and evaluated according to the following criteria A to C. With respect to the abrasion resistance, the solid image evaluated as A is passed, and the solid image evaluated as B or C is failed.
A: No streaks or scratches are observed (see Photo A in Fig. 3)
B: Less than 10 streaks are observed (see Photo B in Fig. 3)
C: 10 or more streaks are observed (see Photo C in Fig. 3)

### • Ejection stability

The ejection stability of the pretreatment liquid and the ink was evaluated based on a degree of warping in a non-printed area. In other words, in the pretreatment liquid and the ink, lower ejection stability leads to a phenomenon where tails of droplets after ejection become wavy, which causes the warping in the non-printed area. Therefore, the greater the warping in the non-printed area is, the lower the ejection stability is.

The evaluation of the degree of warping in the non-printing area was conducted under a constant temperature and high humidity environment (under environment of temperature: 25°C and humidity: 80% RH) to minimize an influence of nozzle drying of the line head. An evaluation apparatus used was an inkjet recording apparatus (prototype model manufactured by Kyocera Document Solutions Co., Ltd., 600 dpi). For this evaluation apparatus, the pretreatment liquid or the ink was purged from the line head and the line head was wiped (purge wipe processing). One minute after the purge wipe processing, a single horizontal line (aligned with main scanning direction) was formed on A4 glossy paper ("Super Fine Paper" manufactured by Seiko Epson Corporation) using the evaluation apparatus. At this time, the line width of the horizontal line was set to 1 dot (equivalent to one drop of pretreatment liquid or ink). A volume per one dot (volume per one drop) of the pretreatment liquid or the ink ejected from each nozzle of the line head was set to 3 pL.

Next, a deviation amount of the horizontal line was determined using an optical microscope ("MM-800" manufactured by Nikon Corporation). Specifically, using an application software included in the optical microscope, a maximum distance (deviation amount) in a sub-scan direction of each dot configuring the horizontal line was measured. A larger deviation amount indicates that a distortion in the horizontal line occurred due to the warping in the non-printed area. With respect to the ejection stability, the deviation amount provided by each pretreatment liquid or ink was used as an evaluation value. The evaluation value for the ejection stability of each pretreatment liquid or ink was evaluated based on the following criteria A and B. With respect to an image density, the pretreatment liquid or the ink evaluated as A is passed, and the pretreatment liquid or the ink evaluated as B is failed.
A: 20 µm or less
B: Over 20 µm

### (Examples 1 to 6)

In each of Examples 1 to 6, the pretreatment liquid containing the binder X1 was used. Additionally, in Examples 1 to 6, the ink with each composition shown in Table 4 was used. Table 5 shows evaluation results for the adhesion of the image, the abrasion resistance of the image, the ejection stability of the pretreatment liquid, and the ink ejection stability in Examples 1 to 6. As shown in Table 5, all of Examples 1 to 6 passed for the adhesion of the image, the abrasion resistance of the image, the ejection stability of the pretreatment liquid, and the ink ejection stability.

**[Table 4]**

| Component | | Example | | | | | |
|---|---|---|---|---|---|---|---|
| | | 1 | 2 | 3 | 4 | 5 | 6 |
| Urethane microparticles | b1 | 5 | 3 | 8 | 5 | | 5 |
| | b2 | | | | | 5 | |
| Water-soluble solvent | c1 | | | | 1.5 | | |
| | c2 | 1.5 | 1.5 | 1.5 | | 1.5 | 1.5 |
| Pigment dispersion liquid | | 20 | 20 | 20 | 20 | 20 | 20 |
| Propylene glycol | | 20 | 20 | 20 | 20 | 20 | 20 |
| Triethylene glycol monobutyl ether | | 8 | 8 | 8 | 8 | 8 | 8 |
| Silface SAG503A | | 0.3 | 0.3 | 0.3 | 0.3 | 0.3 | 0.3 |
| Water | | 45.2 | 47.2 | 42.2 | 45.2 | 45.2 | 45.2 |

**[Table 5]**

| | | Example | | | | | |
|---|---|---|---|---|---|---|---|
| | | 1 | 2 | 3 | 4 | 5 | 6 |
| Image | Adhesion | A | A | A | A | A | A |
| | Abrasion resistance | A | A | A | A | A | A |
| Pretreatment liquid | Deviation(µm) | 18 | 19 | 19 | 20 | 18 | 16 |
| | Ejection stability | A | A | A | A | A | A |
| Ink | Deviation(µm) | 17 | 16 | 19 | 16 | 20 | 17 |
| | Ejection stability | A | A | A | A | A | A |

### (Comparative Examples 1 to 8)

In each of Comparative Examples 1 to 5, the pretreatment liquid containing the binder X2 was used. In each of Comparative Examples 6 and 7, the pretreatment liquid containing the binder X3 was used. In Comparative Example 8, the pretreatment liquid containing the binder X4 was used. Additionally, in Comparative Examples 1 to 8, the ink with each composition shown in Table 6 was used. Table 7 shows evaluation results for the adhesion of the image, the abrasion resistance of the image, and the ejection stability of the pretreatment liquid, and ink for Comparative Examples 1 to 8.

As shown in Table 7, in each of Comparative Examples 6 and 7, the adhesion of the image was failed. It is considered that because each of Comparative Examples 6 and 7 using the binder X3 containing no 2-ethylhexyl acrylate in the pretreatment liquid, the effect of the pretreatment liquid in improving the adhesion of the image was insufficient. Furthermore, in all of Comparative Examples 1 to 8, the abrasion resistance of the image was failed. It is considered that, in each of Comparative Examples 1 to 5 using the pretreatment liquid containing the binder X2, although the effect of improving the adhesion of the image was provided, insufficient hardness caused to peel off easily from the impermeable medium. Additionally, it is considered that, in each of Comparative Examples 6 and 7 using the pretreatment liquid containing the binder X3, the effect of improving the adhesion of the image was not sufficiently provided. Furthermore, it is considered that, in Comparative Example 8 using the pretreatment liquid containing the binder X4, although the effect of improving image adhesion was obtained, insufficient hardness caused to peel off easily from the impermeable medium. In each of Comparative Examples 1 to 5 and 8, the ejection stability of the pretreatment liquid was failed. It is considered that, in each of the pretreatment liquid according to Comparative Examples 1 to 5 and 8, an emulsion state of the binders X2 and X4 having a soft nature is disrupted by shear stress applied during the ejection, leading to poor dispersion, and subsequent thickening and adhesion to the nozzle surface, resulting in the ejection failure.

**[Table 6]**

| Component | | Comparative Example | | | | | | | |
|---|---|---|---|---|---|---|---|---|---|
| | | 1 | 2 | 3 | 4 | 5 | 6 | 7 | 8 |
| Urethane microparticles | b1 | 5 | 3 | 8 | | 5 | 5 | 5 | 5 |
| | b2 | | | | 5 | | | | |
| Water-soluble solvent | c1 | | | | | 1.5 | 1.5 | | |
| | c2 | 1.5 | 1.5 | 1.5 | 1.5 | | | 1.5 | 1.5 |
| Pigment dispersion liquid | | 20 | 20 | 20 | 20 | 20 | 20 | 20 | 20 |
| Propylene glycol | | 20 | 20 | 20 | 20 | 20 | 20 | 20 | 20 |
| Triethylene glycol monobutyl ether | | 8 | 8 | 8 | 8 | 8 | 8 | 8 | 8 |
| Silface SAG503A | | 0.3 | 0.3 | 0.3 | 0.3 | 0.3 | 0.3 | 0.3 | 0.3 |
| Water | | 45.2 | 47.2 | 42.2 | 45.2 | 45.2 | 45.2 | 45.2 | 45.2 |

**[Table 7]**

| | | Comparative Example | | | | | | | |
|---|---|---|---|---|---|---|---|---|---|
| | | 1 | 2 | 3 | 4 | 5 | 6 | 7 | 8 |
| Image | Adhesion | A | A | A | A | A | C | C | A |
| | Abrasion resistance | C | C | C | C | C | C | C | C |
| Pretreatment liquid | Deviation(µm) | 25 | 24 | 26 | 25 | 30 | 18 | 17 | 20 |
| | Ejection stability | B | B | B | B | B | A | A | B |
| Ink | Deviation(µm) | 17 | 16 | 19 | 20 | 16 | 16 | 17 | 17 |
| | Ejection stability | A | A | A | A | A | A | A | A |

## Claims

1. A pretreatment liquid for an impermeable medium on which an image is recorded with a water-based ink, wherein a polar component of surface free energy of the impermeable medium is 20 mJ/m² or less, and the pretreatment liquid contains core-shell particles including 2-ethylhexyl acrylate as a core and benzyl methacrylate as a shell.

2. An ink set, comprising the pretreatment liquid according to claim 1 and a water-based ink, wherein the water-based ink includes
a pigment,
polyurethane microparticles having a glass transition temperature of 40°C or more and 110°C or less and elongation at break at 25°C of 50% or less,
a water-soluble solvent having a boiling point of 200°C or more and an SP value of 19.5 or more and 25.5 or less, and
water, wherein
a content of the polyurethane microparticles in the water-based ink is 3 mass% or more and 8 mass% or less in solid content, and
a content of the water-soluble solvent in the water-based ink is 0.5 mass% or more and less than 2 mass%.

3. The ink set according to claim 2, wherein
a D50 of the polyurethane microparticles is 10 nm or more and 100 nm or less.

4. The ink set according to claim 2 or 3, wherein
the water-based ink further contains a silicone-based surfactant.

5. An inkjet recording apparatus (1) that records an image on a recording surface of an impermeable medium, comprising:
a pretreatment section (2) that applies the pretreatment liquid according to claim 1 to the recording surface;
a recording head (3) that ejects the water-based ink included in the ink set according to claim 2 onto the recording surface; and
a control section (5) that controls the recording head (3) to eject the water-based ink onto the recording surface after the pretreatment section (2) applies the pretreatment liquid to the recording surface, when the impermeable medium contains at least one of polypropylene and polyethylene.

6. The inkjet recording apparatus (1) according to claim 5, further comprising a determination section (4) that determines whether or not the impermeable medium includes at least one of polypropylene and polyethylene, wherein
the control section (5) controls the recording head (3) to eject the water-based ink onto the recording surface after the pretreatment section (2) applies the pretreatment liquid to the recording surface, when the determination section (4) determines that the impermeable medium contains at least one of polypropylene and polyethylene.

7. The inkjet recording apparatus (1) according to claim 5 or 6, wherein
the recording head (3) is a circulating line head.

8. The inkjet recording apparatus (1) according to claim 5 or 6, wherein
the inkjet recording apparatus is used to produce a printed material in which the recording surface of the impermeable medium is visible on a front side and no processing is applied to protect the image.

9. An inkjet recording method that records an image on a recording surface of an impermeable medium, wherein after applying the pretreatment liquid according to claim 1 to the recording surface, the water-based ink according to claim 2 is ejected onto the recording surface.
